# EUROPEAN PATENT SPECIFICATION

(11) **EP 2 531 274 B1**
(45) Date of publication and mention of the grant of the patent: **16.03.2016**
(21) Application number: 11702080.0
(22) Date of filing: 28.01.2011
(51) Int. Cl.: B01D 53/04, B01D 53/44, B01D 53/82, C01B 23/00

(54) **NOBLE GAS PURITION AND RECOVERY METHOD**
VERFAHREN ZUR REINIGUNG UND RÜCKGEWINNUNG VON EDELGAS
PROCÉDÉ DE PURIFICATION ET RÉCUPÉRATION DE GAZ RARE

(30) Priority: 01.02.2010 GB 201001508
(43) Date of publication of application: 12.12.2012
(73) Proprietor: Gas Recovery And Recycle Limited, Steyning, West Sussex BN44 3RD (GB)
(72) Inventor: DR. GRANT, Robert Bruce, Steyning West Sussex BN44 3RD (GB)
(74) Representative: Bonner, Catherine Louise
(86) International application number: PCT/GB2011/050142
(87) International publication number: WO 2011/092507

(56) References cited:
- EP-A2- 0 832 678
- EP-A2- 2 053 019
- DE-A1- 19 708 025
- JP-A- 62 119 104
- US-A- 4 869 883

## Description

The present invention relates to the treatment of gases, and in particular to a method of, and apparatus for, recovering a noble gas from a gas stream. In one embodiment, the invention relates to the recovery of argon from a gas mixture.

There is a growing demand for renewable energy sources and in recent years silicon wafers have increasingly been manufactured for photovoltaic cells. Modules of photovoltaic cells can be electrically connected together to form photovoltaic arrays, so called solar panels, and are capable of generating electric power by converting energy from the sun into electricity. Solar panels arranged in multiples can provide sufficient power for a domestic house or office building. The demand for photovoltaic devices has advanced dramatically in recent years and simplifying the manufacturing process and reducing the cost of fabrication and processing are current key challenges.

One fabrication technique available uses a vacuum furnace along with an inert argon atmosphere enabling crystallisation and recrystallisation of silicon ingots and wafers to form the starting material for desired photovoltaic structures. In this type of vacuum furnace process over 100,000 litres of argon are typically required for a process cycle lasting 40 hours or more and producing a silicon ingot up to 1.8m long ready for onward processing. The estimated cost of annual usage of argon (at current prices) in a typical facility (for example a facility having 40 vacuum furnaces) can be more than £1 million

Other industries with heavy usage of noble gases such as helium, neon, argon, krypton and xenon include the following; vacuum based metallurgy (argon), lamp filling (argon, neon, xenon), semiconductor fabrication and the manufacture of plasma displays (neon, xenon). Xenon also has a number of medical uses including acting as a neural protector, as a clinical anaesthetic and as a contrast agent in MRI scanning.

In at least a vacuum furnace application the purity of the noble gas is important, the argon generated inert atmosphere and argon purge of the furnace should be oxygen free and of a very high purity around 6N i.e. around 1 ppm total contaminants and 99.9999% pure, to avoid reaction (oxidation) and damage to the silicon wafers and ingots being processed in the furnace.

Noble gases such as argon are present in atmospheric air in low concentrations and require considerable energy and financial cost to extract and purify. Therefore, it is very desirable to recover and re-use the noble gases from the effluent stream exhaust from systems and processes using noble gases such as those mentioned above. Re-using the noble gases from waste products also provides some independence and security of supply for the owner of the plant or facility using the noble gas.

The conventional systems used for the recovery of noble gases utilise a catalytic combustion reactor or cryogenic trapping to effectively remove contaminant species from the exhaust gas. In practice the costs associated with cryogenic separation and trapping preclude their use for all but the largest system wide installations and hence this means such systems are limited in their appeal. For local, point of use, recovery and recycle the current state of the art requires the addition of an excess of molecular oxygen prior to a catalytic combustion reactor operating at ∼600°C to convert combustible impurities to carbon dioxide and water. The excess oxygen is then removed using a finely dispersed metal bed e.g. nickel. The metal bed used for oxygen removal has a limited capacity and will require frequent regeneration using pure hydrogen gas offline substantially adding to the complexity of the system. Such systems cannot efficiently remove the varying levels of combustible species, due to changes in process conditions and frequent ingress of oil as used in vacuum pumps, seen in the exhaust streams from vacuum furnaces.

Documents DE19708025, JP62119104, US4869883, EP2053019 and EP0832678 all relate to the recovery of inert and/or noble gases from gas mixtures comprising oxidisable impurities.

It is an aim of at least the preferred embodiment of the present invention to provide a relatively simple and cost effective technique for recovering an inert gas, for example a noble gas such as argon, from a gas mixture which contains the inert gas and oxidisable impurities. It is desirable to provide an efficient and reliable inert gas recovery process.

According to the present invention, there is provided a method of inert gas recovery as claimed in the accompanying claims.

The oxidisable impurities in the first gas stream typically include hydrocarbons, such as traces derived from lubricant oils present in valve apparatus or the like. It is advantageous according to the invention that volatile hydrocarbons, and even methane, in the first stream can be oxidised to carbon dioxide and water, permitting removal of methane without resorting to cryogenic separation or the like.

Purification in this way is such that the components are separated and oxidation occurs in the presence of the solid state oxygen carrier, thus eliminating the need to inject oxygen into the gas stream for purification purposes.

As such the proposed method is advantageous over conventional systems which are uneconomic for recovery of all but the most expensive noble gases i.e. helium, krypton, xenon. In addition the relatively high levels of oxygen injection required in current systems, around 1000s ppm, for complete combustion of the contaminant species does not sit well with the requirement of an oxygen free recovered gas which is addressed with the method and apparatus of the present invention.

Further advantages include the possibility for the regeneration of the solid state oxygen carrier, preferably a metal oxide, during the processing.

The step in the oxidation column in the method according to the invention typically employs a Chemical Looping Combustion (CLC) process, in which the metal oxide is provided as a bed material for oxidation of the first stream, and then reoxidised before a further gas stream is supplied. In the CLC process in the method according to the invention an oxygen carrier, typically in the form of a metal oxide, is used instead of air to provide oxygen for combustion.

The basic chemical looping combustion steps, for a divalent metal oxide,(MO) are as follows:-

### Fuel combustion

(2x+0.5y)MO(s) + CₓH_{y}(g) → (2x+0.5y)M(s) + xCO₂(g) + 0.5yH₂O(g) **1**

### Oxygen carrier regeneration

(2x+0.5y)M(s) + (x+0.25y)O₂(g) → (2x+0.5)MO(s) **2**

Which lead to an equivalent overall combustion reaction of:-

CₓH_{y} + (x+0,25y/)O₂ → xCO₂ + 0,5yH₂O **3**

The oxygen carrier MO typically comprises an oxide of a transition metal of Group Vlllb of the periodic table, such as Cu, Ni, Co or the like (or another transition metal such as Mn or Fe). Where the metal is other than divalent, M, the above equations are adjusted accordingly; as will be apparent to the person skilled in the art. The oxide (which is in the solid state) is typically of a transition metal, and typically on a support comprising, for example, silica and/or alumina or a silicate and/or aluminate.

The labels s and g in parentheses denote whether the component is in the gas (g) or solid (s) state. It is known to operate a CLC process with various compositions of metal oxide particles and with various arrangements of powders and composites etc. So far however high temperatures, up to and above 600° C have been utilised.

In preferred embodiments the method according to the invention provides a chemical looping combustion process to convert combustible species e.g. CO, H₂, hydrocarbons and vacuum pump oil etc., in the exhaust gas stream from the process to CO₂ and water, followed by efficient removal of CO₂ and H₂O in regenerable reactor beds. The method is tolerant to the wide fluctuations in contaminant levels observed in vacuum furnace applications.

Oxidative conversion to CO₂ and H₂O followed by regeneration in this way is such that the components are separated and oxidation occurs by chemical looping combustion in the presence of the solid state oxygen carrier, thus eliminating the need to inject oxygen into the gas stream for purification purposes. The provision of the solid state oxygen carrier also removes the need to use gaseous hydrogen during regeneration of a subsequent oxygen removal reactor.

In one embodiment, the solid state oxygen carrier comprises at least one transition metal oxide. Preferably from periodic table classification groups VIIA, VIIIA, IB or IIB, more preferably an oxide of copper such as copper oxide.

Preferably, the transition metal oxide is combined with an inert support material comprising an oxide of an element chosen from periodic table classification Group IIIA, Group IVA, Group IIIB, Group IVB and the Lanthanide series.

In one embodiment the method includes the step of regenerating the solid state oxygen carrier following the step of oxidation wherein the step of regeneration is undertaken in the presence of a gas phase oxygen carrier mixture, preferably air. The step of regeneration is preferably undertaken in situ and comprises a CLC process.

The method according to the invention can enable recovery of a noble gas stream of about 6N purity (that is 99.9999% purity or 1 ppm total contaminants).

The method preferably further comprises an initial step of filtering the first gas stream and supplying the gas stream to the oxidation reactor. In an embodiment, the method includes a step of cleaning the exhausted noble gas stream using a hot metal getter. Preferably, the hot metal getter comprises a metal selected from titanium, zirconium and alloys thereof. Excess residual air gases can enter the system through air ingress into the furnace or vacuum lines. Residual air gases contain a significant portion of nitrogen which can build up detrimentally within the system. The hot metal getter can be arranged to remove the residual air gases, preferably nitrogen.

In an embodiment, the method may include conveying the purified gas to a collection device for recovered, purified gas, preferably with top up facility to account for and address gas losses. In an embodiment there may be a delivery line back to the process. A preferred method may comprise a monitoring step for monitoring the quality of a gas.

The quantity of solid state oxygen carrier is generally matched to the combustion output (the quantity and level of contamination in the first gas stream), such that the combustible (oxidisable) species is converted into carbon dioxide and water and the inert gas is recovered during a time period of around one process cycle of the process utilising the noble gas. Thus, regeneration of the CLC reactor occurs during the process dead time associated with unload and load of a vacuum furnace and results in an efficient process.

In an embodiment the oxidisation reactor comprises a CLC reactor. In preferred embodiments the temperature of operation of the CLC reactor is in the range from 250° C to 450° C, preferably about 400° C, when it is not needed to oxidise volatile hydrocarbons such as methane. The use of lower temperatures provides an efficient low cost system of conversion and purification. When however it is desired to oxidise volatile hydrocarbons such as methane, it is preferred to use higher temperatures, such as up to about 650° C.

The present invention will now be described in greater detail, by way of example only, with reference to the accompanying drawings, in which:
Figure 1 represents a schematic of a recycle and regeneration system for a first inert gas;
Figure 2 represents a simplified schematic of a recycle and regeneration system for a second inert gas;
Figure 3 represents the experimental arrangement used to test the effectiveness of the system and
Figure 4 represents the spectrometer results of the example experimental arrangement and argon recycling of the present invention.

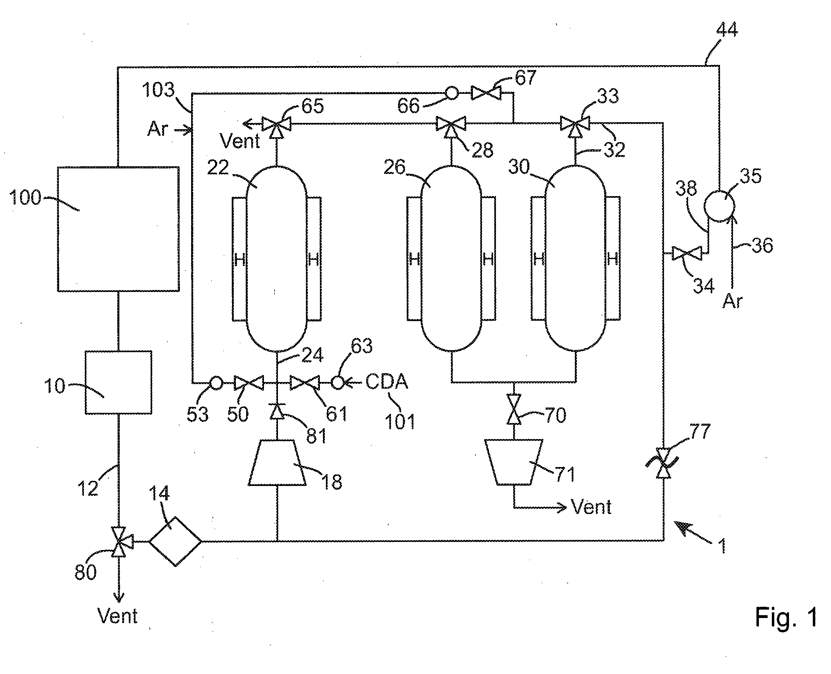

Referring to Figure 1, the recovery and recycle system 1 comprises a source of a gas mixture collected and drawn through from, for example, a vacuum furnace 100 by a vacuum pump 10 and via exhaust 12. The apparatus further comprises valve and isolation device 80 for routing and directing gas around the system 1 and a compressor 18 a filter 14 is provided to remove particles and gross levels of oil vapour. In a preferred embodiment the filter 14 may comprise activated carbon. A CLC reactor 22 is provided in series with the compressor 18 and a carbon dioxide removal column 26. The CLC reactor 22 comprises an evacuated hollow column structure having an inlet and an outlet for respective inlet and exhaust gas streams. The CLC reactor 22 contains a volume of appropriate solid state oxygen carrier material, here copper oxide. The solid state oxygen carrier material is packed inside the column and the column is arranged in a packed bed reactor arrangement. A support material is provided and comprises silica and/or or alumina. A silicate or an aluminate or an aluminosilicate are alternative support materials that could be used. The CLC reactor 22 is sized such that it has a capacity for in excess of the equivalent of a process cycle, and in the preferred embodiment, a capacity of approximately 1.5 process cycles.

The preferred embodiment of the present invention provides that the removal column 26 may be sized to match the CLC reactor 22. The removal column 26 contains a regenerable CO₂ and H₂O removal material. The material may be a looping chemical reaction material based on a metal oxide/metal carbonate couple typically from the metals Cu, Ni, Co, Mn or Fe. The removal column 26 comprises a molecular sieve. The preferred embodiment of the recycle system 1 comprises a water removal column 30. The removal column 30 comprises a material capable of preferentially absorbing moisture and ideally nitrogen from the system, as well as less preferably CO₂, the material is a molecular sieve bed. It is an advantage of the current embodiment that trace amounts of nitrogen can be removed and absorbed from the system as nitrogen can enter the vacuum furnace and the recovery system along with the gas mixture. Entry of nitrogen can be through small air leaks in a valve or a vacuum pump or seal of the system for example. The removal column 30 includes gas exit point 33 and may include monitoring and sensing apparatus such as an FTIR (not shown) for detecting the purity and quality of the recycled and purified gas mixture. The recycle system 1 further comprises a back pressure regulator 77, and a pressure control valve 35. Pressure control valve 35 is provided in a linked arrangement to a back up gas supply, in this example the back up supply is argon supply 36. The back up argon supply 36 may be controlled in such a way such that gas is preferentially fed from the recycle system 1 unless a pressure drop is detected. If a pressure drop is detected it is possible to supply the gas, from the back up supply 36 instead. A gas delivery line 44 is located in communication with recycle system 1 and back up supply 36 for transferring gas to the vacuum furnace 100.

The recycle system 1 further comprises the following elements utilised in a regeneration mode (operation of which will be described in further detail below). Continuing to refer to figure 1, clean dry air (CDA) supply 101 is provided for the regeneration of the reaction stage and the reactor 22 via valve 61 and flow control restriction 63. The one-way valve device 81 and three-way valve 65 are capable of switching between and isolating the reactor column 22 from the removal columns 26, 30. The removal columns 26, 30 are provided with electrical heating elements H (shown schematically and without detail in Figure 1) or other means of heating the columns 26, 30. Temperature reading equipment, such as one or more thermocouples may also be provided to monitor and assess the temperature of the removal columns 26, 30. A purge supply of clean argon 103 for purging the reactor 22 and removal columns 26, 30 is provided as is a vacuum pump 71 provided with access to the system via valve 70.

The recycle apparatus further comprises supply lines, compressors, valves etc associated with carbon dioxide removal column 26 and water removal column 30 as will now be explained in more detail

In operation, the gas to be recovered enters the recycle system 1, from the vacuum pump 10 of the exhaust 12 of a vacuum furnace at approximately atmospheric pressure through valve 80, and passes through a filter 14 to remove particles and gross levels of oil vapour. The filtered gas is compressed by compressor 18 to around a 1 to 5 bar gauge pressure, preferably around 2 bar. The gas, which is predominantly argon in the preferred embodiment, passes through line 20 to enter a CLC reactor 22. The CLC reactor 22 preferably operates at between 250°C and 450°C, preferably about 400°C. The CLC reactor 22 is sized such it has capacity in excess of the equivalent of a process cycle and preferably a capacity of approximately 1.5 process cycles. The CLC reactor converts substantially all combustible material in the gas to CO₂ and H₂O and the gas then passes via line 24 into removal column 26 sized to match the CLC reactor 22 and equipped with a regenerable carbon dioxide removal material. The gas is then passed via line 28 to water removal column 30 to absorb residual moisture and CO₂, and nitrogen. The gas exiting the removal column 30 via line 32 is generally of the required purity i.e. ∼6N, namely 99.9999% purity and is maintained at approximately 2 bar through the action of the backpressure regulator 77. The recycled gas exits the system via valve 34 and pressure control valve 35 to a backup argon supply 36. The latter is preferably controlled in such a way as gas is preferentially fed from the recycle system 1 (that is from column 30) unless the pressure drops for some reason, then gas would be supplied from the back up supply 36. Gas is then transferred to a tool via lines 38, 44 to the vacuum furnace 100 for use as appropriate.

At the vacuum furnace 100 the process cycle ends with a cool down period of approximately 2 to 4 hours; after the cool down period and once the furnace is at a low enough temperature the vacuum pump 10 will be turned off along with the purge gas from line 44. At this point, and until the furnace is back up to working temperature, the recovery system enters a regeneration mode and finally a standby mode as described further below.

The compressor 18 is turned off and process exhaust gas line 12 is isolated at valve 80. Clean dry air, CDA 101, is admitted to the system 1 through valve 61 to regenerate the CLC reactor 22. The latter self heats because the regeneration reaction is highly exothermic - the temperature in the reactor 22 is in the range from 500°C to 800°C, preferably around 600°C; the actual temperature being set by the flow of gas into the reactor via flow restriction 63. The hot gases exiting from the CLC reactor 22 during the regeneration are vented to atmosphere via three way valve 65 which also isolates the CO₂ and H₂O absorber columns 26, 30. This will continue until sufficient air along air flow path 63, 61, 22 has been reacted to completely regenerate the material of the CLC reactor 22. At that time the CDA supply valve 61 will be switched off and argon from an argon purge valve 50 and flow restriction 53 will be switched on to purge the CLC reactor 22 of residual nitrogen.

The columns 26, 30 are regenerated through a combination of being heated electrically, purged with clean argon via flow restriction 66 and valve 67, and evacuated through vacuum pump 71 via valve 70. The operation of 3-way valves 28 and 33 isolate the columns 26, 30 from the rest of the system and as the removal columns 26 and 30 are heated, purged and evacuated the absorbed CO₂ and H₂O and any N₂ is desorbed and vented and removed via the vacuum pump 71. The removal columns 26 and 30 will continue to be heated, purged and evacuated until essentially all the absorbed CO₂, H₂O and N₂ is vented. At that stage in the process the heating supply is turned off and the columns 26, 30 allowed to cool to their operating temperatures. The cooling stage takes place under argon purge and vacuum pumping at which point valves 50, 67 and 70 are closed, three way valves 65, 28 and 33 switch and the compressor 18 is turned on. The system is in standby mode. On receiving the appropriate signal from the vacuum furnace valves 81 and 34 are opened and the recycle system 1 is ready to recover fresh gas.

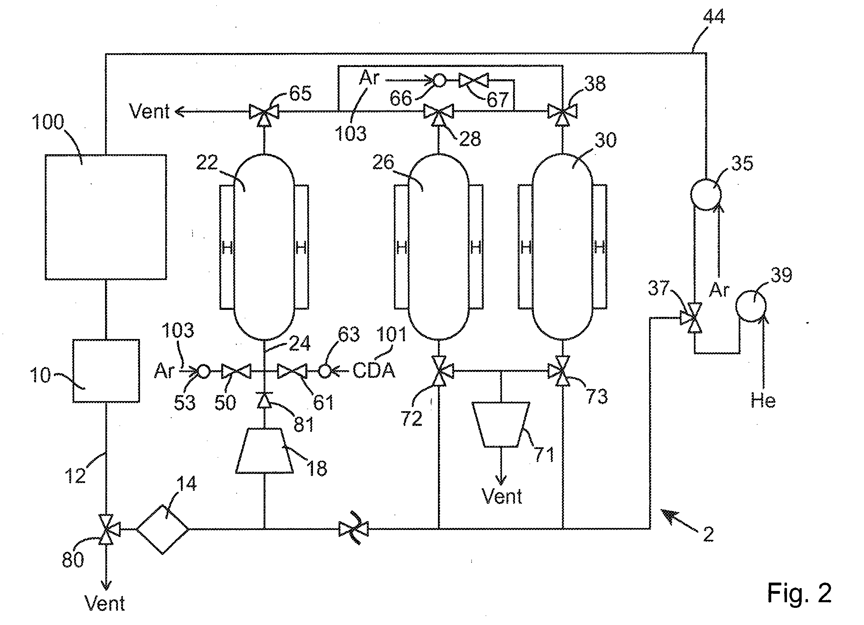

Referring now to Figure 2, a recovery and recycle system 2 for combined recovery of two inert gases according to an embodiment of the invention is described. In the described embodiment the inert gases are argon and helium. In Figure 2 where like reference numerals correspond to like features as described for Figure 1. In this embodiment the regeneration of the columns 26, 30 is carried out during the recovery process or "on the fly" The recovery system 2, in addition to the apparatus and system of Figure 1, described above such as reactor and removal columns 22, 26, 30, includes additional by-pass valves 72, 73 and 37 for directing and routing fluid flow. Further, there is at least one switch over valve 35, 39 acting to direct the flow of the first inert gas to the process tool and vacuum furnace 100 or to the purge supply and to direct and guide the second inert gas to the process tool and vacuum furnace 100. The switch over valve 39 is connected to a back up supply of the second inert gas (for example, to helium). The by-pass valves 28, 38, 72 and are provided in fluid communication with the removal columns 26, 30 such that the gas flow during normal operation can be routed through either absorber column 26 or 30, the other column being regenerated or in standby mode.

In operation, the flow of a first gas, here argon, or a gas mixture, through column 26 and to the process tool along gas line connection 44 is achieved with the combination of opening valves 28, 72 and 37 such that the gas flow is diverted into the fluid flow path for the removal column 26. The switch over valve 35 is selected to allow the argon gas to flow to the process tool and vacuum furnace 100 along connection 44.

In this configuration argon from the purge supply 103 is routed to flow through by-pass valve 38 into column 30 and to exhaust through by-pass valve 73 and vacuum pump 71. Throughout this operation the absorber column 30 is electrically heated to accelerate the processing of the absorbed CO₂, H₂O, N₂ etc to fully desorb and exit the system. At this point the electrical heater is turned off and column 30 cools down to its operating temperature after which point the column 30 regenerates and becomes available to remove CO₂, H₂O, N₂ etc again. The inert gas can thus be routed through column 30 via by-pass valves 38 and 73 and via valve 37 and the appropriate switch over valve 35, 39 to delivery at the process tool via line connection 44. Column 26 is then regenerated as described above for column 30.

As discussed above, such a flow regime is advantageous in situations where the levels of contamination in a gas mixture are high and it is not therefore practical to size removal columns 26 and 30 to the CLC reactor and a single process cycle.

In an alternative configuration the recycling systems 1, described above with reference to Figure 1 can allow a second, inert purge gas to be recycled (as shown in Figure 2). In this way the preferred embodiment includes the modification of replacing the shut-off valve 34 in recovery system 1 with a by-pass valve 37 in recovery system 2 along with a second gas switching valve 39 such that the purge gas helium can be recycled and used to aid furnace cooldown,

In operation, the by-pass valve 37 is switched on receipt of instructions or a cue such that fluid flow is diverted to flow through gas switching valve 39 and via connection 44 to the process tool and vacuum furnace 100. In a preferred embodiment the time delay between the process system selecting and switching to the second inert purge gas and the by-pass valve 37 switching is commensurate with the transit time of that gas through the recovery system 2.

After recovery and recycling of the second inert gas the second inert purge gas is switched off, valve 37 switches back to argon delivery and the recovery system enters regeneration mode as described above for recycling system 1.

In a third embodiment, not shown, "on the fly" regeneration of the CLC reactor 22 can be effected through the addition of by-pass valves and a second CLC reactor column.

Additionally, at the exit point 34 where the purified, inert gas can be returned to the vacuum furnace, an optional gas quality sensor (not shown) can be fitted. This could be, for example, a process Gas Chromatograph, or a process infrared spectrometer or other sensor known in the art.

In the embodiment described above vacuum regeneration of the or each molecular sieve is achieved by external electrical heating, for example with a direct heating element or using an indirect heat source and a fan. In an alternative embodiment the or each molecular sieve is heated by recovering the usually vented off-gas from the CLC reactor and redirecting it to the one or more molecular sieves. In the embodiment using a vacuum for the regeneration one or more additional valves may be provided to allow the sieve columns to be connected in parallel and to be pumped by a vacuum pump. For example, a separate vacuum pump could be used, or a combined compressor and vacuum pump. Alternatively the vacuum may utilise the process tool apparatus master vacuum pump during the period of apparatus tool load and unload, also known as the "process deadtime" period. In combination with the vacuum pump arrangement selected, a purge flow of clean argon may be used to aid regeneration of the molecular sieve and/or to control the pressure in the system to around 10 to 100 mbar. The exact pressure of a small purge flow is selected depending on the type of vacuum pump used.

In the alternative embodiment for purifying high levels of contamination the molecular sieve columns may need to undergo a regeneration step around every 10 hours. In this embodiment regeneration may be switched between columns part way through the regeneration cycle. Purifying exceptionally high levels of contamination can be achieved by utilising an additional non-regenerative CO₂ removing column to "mop up" CO₂ that gets through the molecular sieve(s). In this alternative scheme the non-regenerative column should be replaced every 6-12 months, being replaced, for example during a standard system service.

Alterations in the system parameters for example in an operating temperature and pressure range, may be required for different gas mixtures and flows that are processed and recovered. The system parameters may be altered for different ranges and types of contaminants and also if higher purification levels are required.

### Example

The following example is not according to the present invention.

The mixture gas of the following examples contained both carbon monoxide and hydrogen in a mix to be processed by the argon recycling system.

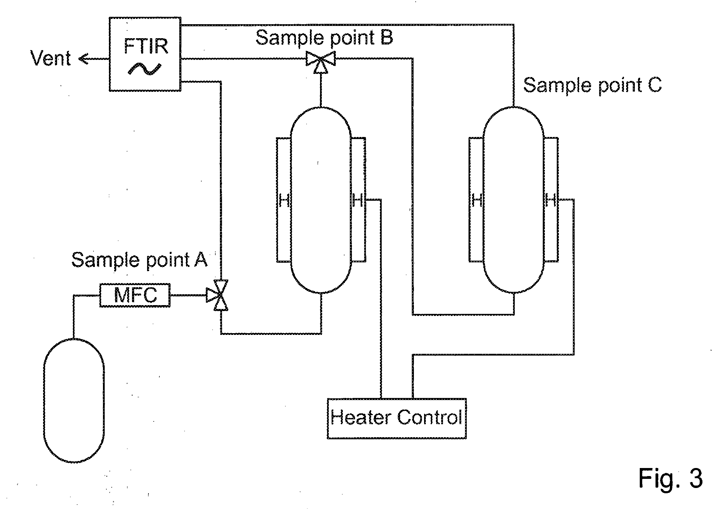

Specifically, 5,082ppm CO and 507ppm H₂ in an argon matrix was supplied to a CLC reactor and molecular sieve 13X absorber column in series with the ability to extract gas samples to a high sensitivity infrared spectrometer as shown on Figure 3 of the drawings. The process was executed under the following control conditions; a pressure of 1 bar gauge, a CLC reactor temperature of 400°C with that of the molecular sieve absorber at 21 °C and with a gas flow of 1.2slm (standard litres per minute).

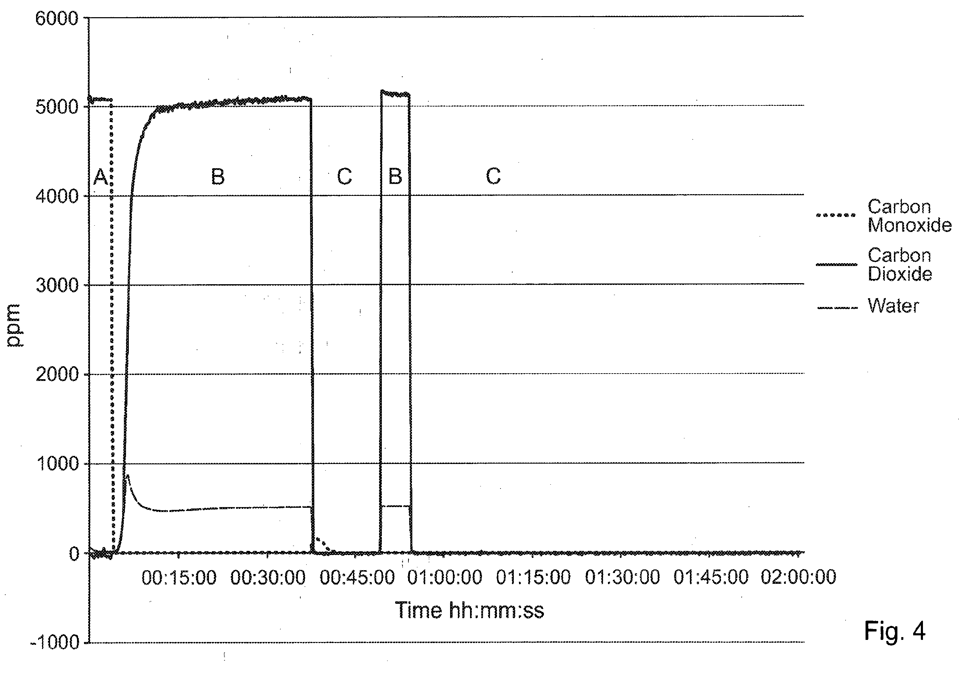

During the experiment the gas was sampled from the process points A to C on Figure 3. Just before the CLC reactor at A, just after the CLC reactor at B and beyond the molecular sieve absorber C. The results are illustrated graphically in Figure 4 and are shown below in Table 1. The complete conversion of the CO and H₂ into CO₂ and H₂O, can be seen after the CLC reactor in regions labelled B, and post the molecular sieve absorber, the CO₂ and H₂O are removed to ∼1ppm levels, regions C.

**Result Table 1**

| | A | B | C | B | C |
|---|---|---|---|---|---|
| CO | 5080 ±20 ppm | < 1 ppm | < 1 ppm | < 1 ppm | <1 ppm |
| CO₂ | <1 ppm | 5088 ±20 ppm | < 1 ppm | 5100±20 ppm | < 1 ppm |
| H₂O | 1.5 ± 1 ppm | 510±5 ppm | 1.5±1 ppm | 508±5 ppm | < 1 ppm |

## Claims

1. A method of recovering a noble gas from a first gas stream comprising the noble gas and oxidisable impurities, the method comprising the steps of
supplying the first gas stream to an oxidation reactor containing a solid state oxygen carrier and oxidising the impurities in the first gas stream in the presence of the solid state oxygen carrier,
to form a second gas stream containing carbon dioxide and water,
supplying the second gas stream to a carbon dioxide removal column, and removing carbon dioxide from the second gas stream in the column to form a third gas stream, removing water from the third gas stream in an adsorption column to produce purified noble gas,
and collecting the purified noble gas from the adsorption column for conveying to a further process utilising the noble gas, wherein
the carbon dioxide removal column and water adsorption column comprise molecular sieves.

2. A method according to Claim 1, wherein the solid state oxygen carrier comprises at least one transition metal oxide.

3. A method according to Claim 2, wherein the transition metal oxide is provided on an inert support material comprising an oxide of an element chosen from periodic table classification Group IIIA, Group IVA, IIIB, IVB and the Lanthanide series.

4. A method according to any one of Claims 1 to 3, further comprising the step of regenerating the solid state oxygen carrier following the step of oxidation using a gas comprising oxygen, such as air.

5. A method according to any preceding claim, wherein the step of regeneration comprises a chemical looping combustion (CLC) process.

6. A method according to claim 5, wherein the temperature of operation of the CLC process is in the range from 250° C to 650° C.

7. A method according to any preceding claim, in which the first gas stream is filtered before supply to the oxidation reactor.

8. A method according to any preceding claim, in which the purified noble gas is (a) cleaned using a hot metal getter such as titanium, zirconium and optionally an alloy thereof; (b) conveyed to a collection device and optionally (c) has the quality thereof continuously monitored.

9. A method according to any preceding claim, wherein the quantity of oxygen supplied by the solid state oxygen carrier is at least the stoichiometric amount relative to the oxidisable impurities.

10. A method according to any preceding claim, further comprising regenerating the carbon dioxide column and water adsorption column using heat from the oxidation reactor.

## Patentansprüche

1. Verfahren zum Rückgewinnen eines Edelgases aus einem ersten Gasstrom, der das Edelgas und oxidierbare Verunreinigungen umfasst, wobei das Verfahren die folgenden Schritte umfasst:
Zuführen des ersten Gasstroms zu einem Oxidationsreaktor, der einen Sauerstoffträger im festen Zustand enthält, und Oxidieren der Verunreinigungen in dem ersten Gasstrom in Anwesenheit des Sauerstoffträgers im festen Zustand, zur Bildung eines zweiten Gasstroms, der Kohlendioxid und Wasser enthält,
Zuführen des zweiten Gasstroms zu einer Kohlendioxidentfernungssäule und Entfernen von Kohlendioxid aus dem zweiten Gasstrom in der Säule zur Bildung eines dritten Gasstroms,
Entfernen von Wasser aus dem dritten Gasstrom in einer Adsorptionssäule, um gereinigtes Edelgas zu produzieren,
und Auffangen des gereinigten Edelgases von der Adsorptionssäule, um es zu einem weiteren Verfahren zu fördern, welches das Edelgas nutzt, wobei die Kohlendioxidentfernungssäule und Wasseradsorptionssäule Molekularsiebe umfassen.

2. Verfahren nach Anspruch 1, wobei der Sauerstoffträger im festen Zustand mindestens ein Übergangsmetalloxid umfasst.

3. Verfahren nach Anspruch 2, wobei das Übergangsmetalloxid auf einem inerten Trägermaterial bereitgestellt wird, das ein Oxid eines Elements ausgewählt aus der Gruppe IIIA, Gruppe IVA, IIIB, IVB und den Lanthanidenreihen gemäß Klassifizierung des Periodensystems umfasst.

4. Verfahren nach einem der Ansprüche 1 bis 3, ferner umfassend den Schritt des Regenerierens des Sauerstoffträgers im festen Zustand nach dem Oxidationsschritt unter Verwendung eines Gases, das Sauerstoff umfasst, wie Luft.

5. Verfahren nach einem der vorhergehenden Ansprüche, wobei der Regenerierungsschritt ein Chemical Looping Combustion- (CLC)-Verfahren umfasst.

6. Verfahren nach Anspruch 5, wobei die Betriebstemperatur des CLC-Verfahrens im Bereich von 250 °C bis 650 °C liegt.

7. Verfahren nach einem der vorhergehenden Ansprüche, wobei der erste Gasstrom gefiltert wird, bevor er dem Oxidationsreaktor zugeführt wird.

8. Verfahren nach einem der vorhergehenden Ansprüche, wobei das gereinigte Edelgas (a) unter Verwendung eines heißen Metallgetters gesäubert wird, wie Titan, Zirkonium und gegebenenfalls einer Legierung davon; (b) zu einer Auffangvorrichtung gefördert wird und gegebenenfalls (c) kontinuierlich einer Qualitätskontrolle unterzogen wird.

9. Verfahren nach einem der vorhergehenden Ansprüche, wobei die Sauerstoffmenge, die dem Sauerstoffträger im festen Zustand zugeführt wird, mindestens die stöchiometrische Menge in Bezug auf die oxidierbaren Verunreinigungen ist.

10. Verfahren nach einem der vorhergehenden Ansprüche, ferner umfassend Regenerieren der Kohlendioxidsäule und Wasseradsorptionssäule unter Verwendung von Wärme aus dem Oxidationsreaktor.

## Revendications

1. Procédé de récupération d'un gaz noble à partir d'un premier courant de gaz qui comprend le gaz noble et des impuretés oxydables, le procédé comprenant les étapes qui consistent à :
fournir le premier courant de gaz à un réacteur d'oxydation contenant un transporteur solide d'oxygène et oxyder les impuretés dans le premier courant de gaz en présence du transporteur solide d'oxygène,
former un deuxième courant de gaz contenant du dioxyde de carbone et de l'eau,
fournir le deuxième courant de gaz à une colonne d'élimination du dioxyde de carbone, et éliminer le dioxyde de carbone du deuxième courant de gaz dans la colonne pour former un troisième courant de gaz, éliminer l'eau du troisième courant de gaz dans une colonne d'adsorption pour produire un gaz noble purifié,
et collecter le gaz noble purifié de la colonne d'adsorption pour l'acheminer à un autre procédé qui utilise le gaz noble, dans lequel
la colonne d'élimination du dioxyde de carbone et la colonne d'adsorption de l'eau comprennent des tamis moléculaires.

2. Procédé selon la revendication 1, dans lequel le transporteur solide d'oxygène comprend au moins un oxyde d'un métal de transition.

3. Procédé selon la revendication 2, dans lequel l'oxyde de métal de transition est fourni sur un matériau de support inerte qui comprend un oxyde d'un élément choisi dans la classification du tableau périodique des groupes IIIA, IVA, IIIB, IVB et de la série des lanthanides.

4. Procédé selon l'une quelconque des revendications 1 à 3, comprenant en outre l'étape de régénération du transporteur solide d'oxygène après l'étape d'oxydation en utilisant un gaz contenant de l'oxygène, comme l'air.

5. Procédé selon l'une quelconque des revendications précédentes, dans lequel l'étape de régénération comprend un procédé de combustion en boucle chimique (CLC).

6. Procédé selon la revendication 5, dans lequel la température de fonctionnement du procédé CLC varie dans la plage de 250 °C à 650 °C.

7. Procédé selon l'une quelconque des revendications précédentes, dans lequel le premier courant de gaz est filtré avant d'être acheminé au réacteur d'oxydation.

8. Procédé selon l'une quelconque des revendications précédentes, dans lequel le gaz noble purifié est (a) nettoyé à l'aide d'un dégazeur métallique chaud tel que le titane, le zirconium et éventuellement un alliage de ceux-ci ; (b) transporté vers un dispositif de collecte et dont, éventuellement, (c) on surveille la qualité en continu.

9. Procédé selon l'une quelconque des revendications précédentes, dans lequel la quantité d'oxygène fournie par le transporteur solide d'oxygène est au moins la quantité stoechiométrique par rapport aux impuretés oxydables.

10. Procédé selon l'une quelconque des revendications précédentes, comprenant en outre la régénération de la colonne de dioxyde de carbone et de la colonne d'adsorption de l'eau en utilisant la chaleur du réacteur d'oxydation.
